# EUROPEAN PATENT APPLICATION

(11) **EP 4 318 734 A1**
(43) Date of publication of application: **07.02.2024**
(21) Application number: 22916678.0
(22) Date of filing: 27.12.2022
(51) Int. Cl.: H01M 10/613, H01M 10/656, H01M 10/6569, H01M 10/627

(54) **BATTERY PACK COOLING DEVICE AND CHARGING STATION COMPRISING SAME**

(30) Priority: 27.12.2021 KR 20210187932
(71) Applicant: LG ENERGY SOLUTION, LTD., Seoul 07335 (KR)
(72) Inventor: UM, Tae Ki, Daejeon 34122 (KR); KONG, Seung Jin, Daejeon 34122 (KR); YANG, Jae Hun, Daejeon 34122 (KR); LEE, Jung Hoon, Daejeon 34122 (KR); KIM, Se Ho, Daejeon 34122 (KR); KIM, Doo Seung, Daejeon 34122 (KR); PARK, Jeong Gi, Daejeon 34122 (KR)
(74) Representative: Goddar, Heinz J.
(86) International application number: PCT/KR2022/021342
(87) International publication number: WO 2023/128537

(57) **Abstract**

A battery pack cooling device according to one example of the present invention comprises: a charging housing provided with an inlet, an outlet, and a pack insertion space into which a battery pack is inserted; a charging part, which is electrically connected to the battery pack inserted into the pack insertion space, for charging the battery pack; a circulation part provided such that cooling water is supplied to the pack insertion space through the inlet and the cooling water in the pack insertion space is recovered through the outlet; a heating part provided to provide heat to the pack insertion space; and a control part for controlling the charging part, the heating part, and the circulation part.

## Description

### Technical Field

The present invention relates to a battery pack cooling device, and a charging station comprising the same, which relates to, particularly, a shared battery pack cooling device capable of improving a charging efficiency of a battery pack by directly cooling the battery pack by a water-cooling method, and a charging station comprising the same.

This application claims the benefit of priority based on Korean Patent Application No. 10-2021-0187932 dated December 27, 2021, the disclosure of which is incorporated herein by reference in its entirety.

### Background Art

With global warming, carbon dioxide emission amounts are limited. Accordingly, the use of internal combustion engines using fossil fuels gradually decreases, and motors without emitting carbon dioxide during operation replace internal combustion engines.

The motor receives power from a battery provided on one side of the motor. The battery needs to be recharged when it is discharged, and the battery charging time is relatively long compared to the fossil fuel replenishment time.

To solve such a problem, a shared battery charging device has been developed. In the method of using the shared battery charging device, a user pays for the used amount of electricity, and replaces a battery pack charged at a charging station with the discharged battery in a ratio of 1:1, without directly charging the batter.

The shared battery charging device can increase use convenience properties of the battery, but in order to realize this, it is assumed that the charged battery packs are always ready at the charging station.

Therefore, in the shared battery charging device, it is necessary to increase the number of charging parts in which the battery pack is charged, and it is necessary to improve the charging efficiency of the battery pack during charging.

### Disclosure

### Technical Problem

The present invention is intended to provide a battery pack cooling device capable of improving a charging efficiency of a battery pack by directly cooling the battery pack using a water-cooling method, and a charging station comprising the same.

In addition, the present invention is intended to provide a battery pack cooling device capable of preventing loss of cooling water upon replacing a battery pack by primarily recovering cooling water after charging of the battery pack is completed and vaporizing the cooling water remaining in the battery pack to secondarily recover it, and a charging station comprising the same.

### Technical Solution

A battery pack cooling device according to one example of the present invention comprises: a charging housing provided with an inlet, an outlet, and a pack insertion space into which a battery pack is inserted; a charging part, which is electrically connected to the battery pack inserted into the pack insertion space, for charging the battery pack; a circulation part provided such that cooling water is supplied to the pack insertion space through the inlet and the cooling water in the pack insertion space is recovered through the outlet; a heating part provided to provide heat to the pack insertion space; and a control part for controlling the charging part, the heating part, and the circulation part.

Also, the control part may operate the circulation part such that upon operation of the charging part in a state where the battery pack is inserted into the pack insertion space, the cooling water is supplied to the pack insertion space and the cooling water heat-exchanged with the battery pack is recovered.

In addition, the control part may be provided such that when the heat-exchanged cooling water is completely discharged from the pack insertion space, it stops the operation of the circulation part and operates the heating part to supply heat to the pack insertion space.

Furthermore, the control part may be provided such that in a state where the battery pack is accommodated in the pack insertion space, it stops the operation of the charging part and then operates the heating part.

Also, the heating part may supply heat to vaporize the cooling water remaining in the pack insertion space.

In addition, the circulation part may comprise a cooling water tank in which the cooling water is stored; a cooler provided such that the inlet of the charging housing and the cooling water tank are connected, and the cooling water is cooled; and a pump for connecting the outlet of the charging housing and the cooling water tank, and recovering the cooling water in the pack insertion space through the outlet.

Furthermore, the control part may control the circulation part such that upon charging operation of the charging part, the cooling water is introduced from the cooling water tank into the pack insertion space after passing through the cooler, and the cooling water heat-exchanged with the battery pack in a process of passing through the pack insertion space flows into the cooling water tank through the pump.

Also, the control part may control the circulation part such that upon operation of the heating part, the vaporized particles of the cooling water are provided to the cooler through the pump, liquefied in the cooler, and then supplied to the cooling water tank.

In addition, the pump may be connected to the cooling water tank and the cooler, respectively, to allow fluid migration, and the control part may control the circulation part such that upon charging operation of the charging part, the cooling water supplied from the cooling water tank is cooled through the cooler and then supplied to the inlet. Furthermore, the control part may control the circulation part such that upon operation of the heating part, the vaporized particles of the cooling water are supplied to the cooler through the pump, liquefied in the cooler, and then supplied to the cooling water tank.

Also, the battery pack cooling device may further comprise a pipe part connecting the circulation part and the charging housing.

The pipe part may comprise a first pipe connecting the cooler and the cooling water tank, a second pipe connecting the cooler and the inlet of the charging housing, a third pipe connecting the outlet of the charging housing and the pump, a fourth pipe connecting the pump and the cooling water tank, and a fifth pipe connecting the pump and the cooler.

In addition, the battery pack cooling device may further comprise a first valve provided at the inlet of the charging housing and controlling the opening and closing of the inlet, a second valve provided at the outlet of the charging housing and controlling the opening and closing of the outlet, a third valve provided on the first pipe, a fourth valve provided on the fourth pipe, and a fifth valve provided on the fifth pipe.

Furthermore, the control part may control the circulation part such that upon charging operation of the charging part, the first valve, the second valve, the third valve, and the fourth valve are opened, and the fifth valve is closed; the cooling water is introduced from the cooling water tank into the pack insertion space after passing through the cooler; and the cooling water heat-exchanged with the battery pack in a process of passing through the pack insertion space flows into the cooling water tank through the pump.

Also, the control part may control the circulation part such that upon operation of the heating part, the second valve, the third valve, and the fifth valve are opened, and the first valve and the fourth valve are closed; and the vaporized particles of the cooling water are provided to the cooler through the pump, liquefied in the cooler, and then supplied to the cooling water tank.

In addition, according to another aspect of the present invention, a charging station comprising the battery pack cooling device is provided.

### Advantageous Effects

The present invention can improve the charging efficiency of the battery pack by directly cooling the battery pack using a direct water-cooling method.

After charging of the battery pack is completed, the present invention can recover the cooling water introduced into the charging housing as much as possible by primarily recovering the cooling water from the charging housing, and vaporizing the cooling water remaining on the outer surface of the battery pack to secondarily recover it.

Also, by preventing the loss of cooling water, it is possible to reduce the maintenance cost of the cooling device of the shared battery pack.

Furthermore, by completely removing the water due to the cooling water from the battery pack through the process of recovering the cooling water from the charging housing as above, the present invention can prevent problems such as skin troubles of replacement workers due to components present in the cooling water in advance.

### Description of Drawings

Figure 1 schematically illustrates a charging station to which a battery pack cooling device according to one example of the present invention is applied.
Figure 2 schematically illustrates an installation state diagram of a battery pack inserted into a charging housing in one example of the present invention.
Figures 3 to 5 schematically illustrate configuration diagrams of a battery pack cooling device according to one example of the present invention.
Figure 6 schematically illustrates one operating state of a battery pack cooling device upon charging of a battery pack in one example of the present invention.
Figures 7 and 8 schematically illustrate one operating state of a battery pack cooling device after charging of the battery pack is completed in one example of the present invention.

### Mode for Invention

Hereinafter, a battery pack cooling device according to one example of the present invention, and a charging station comprising the same will be described in detail with reference to the accompanying drawings.

In addition, regardless of the reference numerals, the same or corresponding components are given by the same or similar reference numerals, and duplicate descriptions thereof will be omitted, and for convenience of explanation, the size and shape of each component as shown can be exaggerated or reduced.

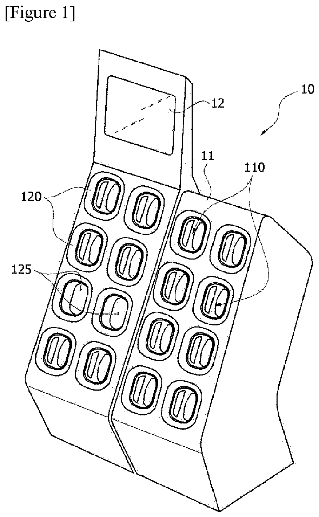

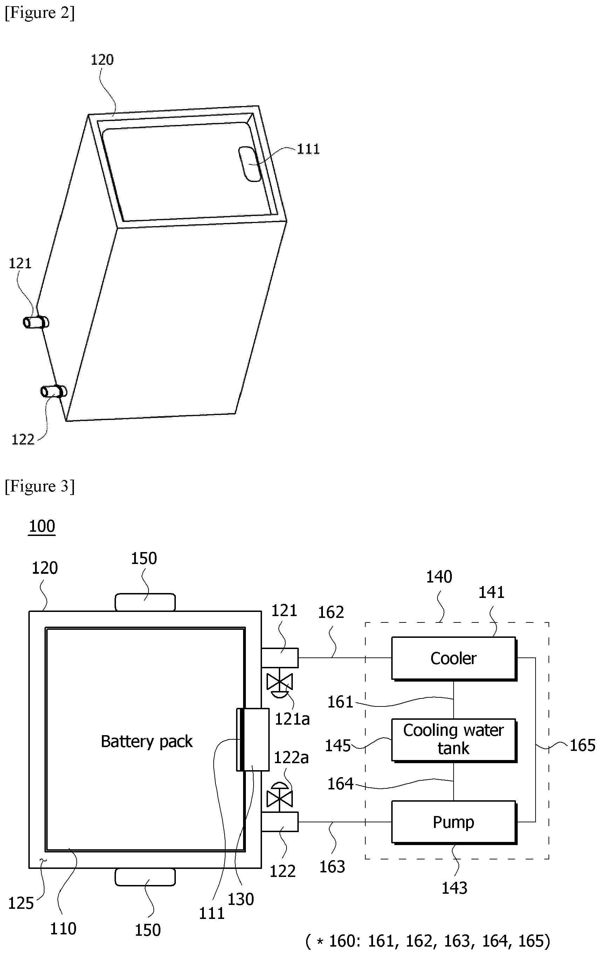

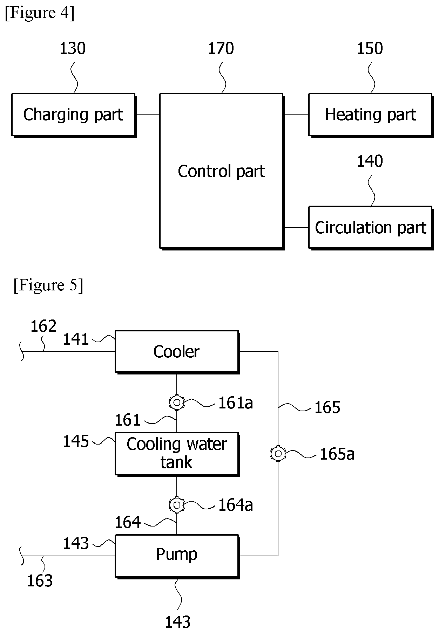

Figure 1 schematically illustrates a charging station (10) to which a battery pack cooling device according to one example of the present invention is applied, Figure 2 schematically illustrates an installation state diagram of a battery pack inserted into a charging housing in one example of the present invention, and Figures 3 to 5 schematically illustrate configuration diagrams of a battery pack cooling device according to one example of the present invention.

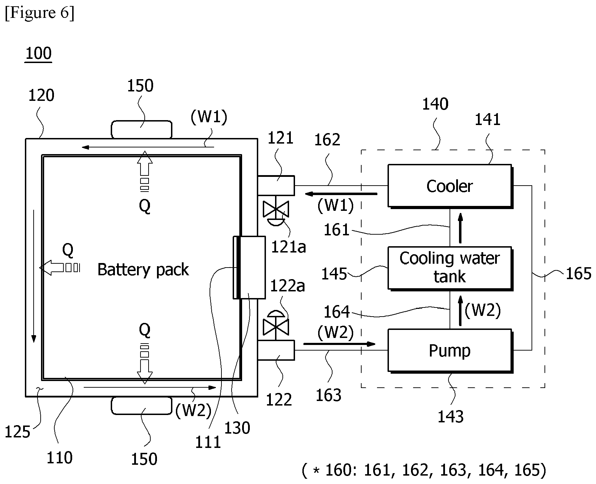

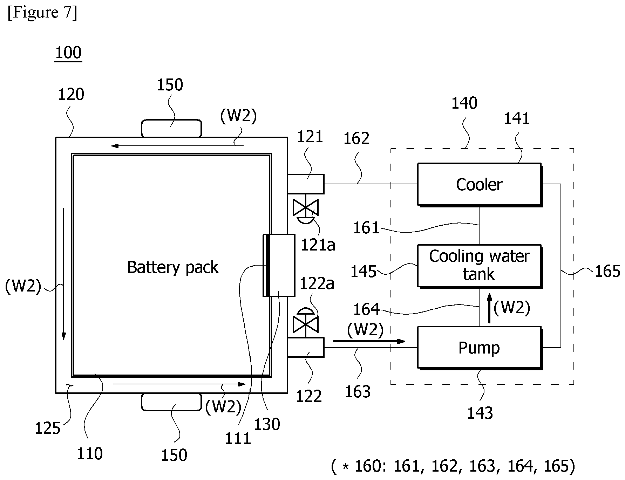

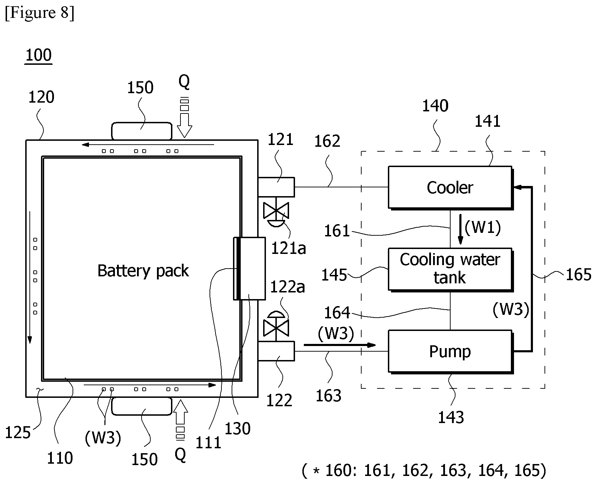

Figure 6 schematically illustrates one operating state of a battery pack cooling device upon charging of a battery pack in one example of the present invention, and Figures 7 and 8 schematically illustrate one operating state of a battery pack cooling device after charging of the battery pack is completed in one example of the present invention.

In this document, the cooling water (W1) used in the direct water-cooling method may be insulated special cooling water (W1). For example, 3M's NOVEC (trade name) may be used as the special cooling water (W1). The special cooling water (W1), which is nonpolar and has corrosion resistance, has excellent performance as the cooling water (W1) of the battery cell. However, since the special cooling water (W1) is expensive, a loss prevention structure is required.

Referring to Figure 1, a battery pack cooling device (100) according to one example of the present invention is applied to a charging station (10). The battery pack cooling device (100) is provided such that when the battery pack (110) is charged, it cools the battery pack (110) by a direct water-cooling method, and after the battery pack (110) is completely charged, it recovers the cooling water (W1) from the battery pack (110) so that the cooling water (W1) does not remain in the battery pack (110).

Referring to Figure 1, the charging station (10) is a charging station for charging the battery pack (110). The charging station (10) comprises a battery pack cooling device (100), a station box (11), and an operating part (12). Here, the operating part (12) is provided outside the station box (11), and a user can control whether the battery pack (110) is charged or not through the operating part (12). Then, the shared battery pack cooling device (100) is installed in the station box (11).

The battery pack cooling device (100) according to one example of the present invention comprises a charging housing (120), a charging part (130), a circulation part (140), a heating part (150), and a control part (170). In addition, the battery pack cooling device (100) may comprise a pipe part (160) connecting the circulation part (140) and the charging housing (120).

Referring to Figures 3 to 5, the battery pack cooling device (100) comprises a charging housing (120) provided with an inlet (121), an outlet (122), and a pack insertion space (125) into which a battery pack (110) is inserted; a charging part (130), which is electrically connected to the battery pack (110) inserted into the pack insertion space (125), for charging the battery pack (110); a circulation part (140) provided such that cooling water is supplied to the pack insertion space (125) through the charging part (130) and the cooling water in the pack insertion space is recovered through the outlet (122); a heating part (150) provided to provide heat to the pack insertion space (125); and a control part (150) for controlling the charging part (130), the heating part (150) and the circulation part (140).

The battery pack (110) may comprise a plurality of battery cells (not shown), which has a charging connector (111) to be connected to the charging part (130). Since the battery pack (110) is a well-known product, a detailed description of the structure of the battery pack (110) will be omitted.

The charging station (10) may comprise a plurality of charging housings (120) for simultaneously charging a plurality of battery packs (110), respectively.

The charging part (130) may be individually provided in the respective charging housings (120). The charging part (130) is electrically connected to the charging connector (111) of the battery pack (110) and applies a current to the battery pack (110), thereby performing a function to charge the battery pack (110).

The charging housing (120) is provided in the station box (11). The charging housing (120) may have a cylindrical structure in which the pack insertion space (125) is provided. Here, the pack insertion space (125) is a space into which the battery pack (110) is inserted.

Referring to Figure 2, an inlet (121) and an outlet (122) are provided in the charging housing (120). The inlet (121) and the outlet (122) are provided to allow fluid migration with the pack insertion space (125). In this example, the inlet (121) is an opening where the cooling water (W1) is introduced into the pack insertion space (125), and the outlet (122) is an opening where the cooling water (W1) is discharged from the pack insertion space (125).

Referring to Figure 3, a first valve (121a) is installed at the inlet (121). The first valve (121a) is a valve for controlling the opening and closing of the inlet (121). The first valve (121a) opens the inlet (121) upon charging operation of the charging part (130) to allow the cooling water (W1) to flow from the cooler (141) to the pack insertion space (125).

A second valve (122a) is installed at the outlet (122). The second valve (122a) is a valve for controlling the opening and closing of the outlet (122). The second valve (122a) opens the outlet (122) upon operation of the pump (143) to allow the heat-exchanged cooling water (W2) to flow from the pack insertion space (125) to the pump (143).

The charging housing (120) is connected to the circulation part (140) by a pipe part (160). The pipe part (160) comprises a first pipe (161) to a fifth pipe (165).

The first pipe (161) connects the cooler (141) and the cooling water tank (145), the second pipe (162) connects the cooler (141) and the inlet (121) of the charging housing, the third pipe (163) connects the outlet (122) of the charging housing (120) and the pump (143), the fourth pipe (164) connects the pump (143) and the cooling water tank (145), and the fifth pipe (165) connects the pump (143) and the cooler (141). Meanwhile, the first valve (121a) may also be provided on the second pipe, and the second valve (122a) may also be provided on the third pipe (163).

In addition, the pipe part (160) may comprise a third valve (161a) provided on the first pipe (161), a fourth valve (164a) provided on the fourth pipe (164), and a fifth valve (165a) provided on the fifth pipe (165). The opening and closing of the respective valves (121a, 122a, 163a, 164a, 165a) may be controlled by the control part (170).

The charging housing (120) and the circulation part (140) are connected so that the cooling water (W1) can circulate. Then, a heating part (150) may be installed on an outer surface of the charging housing (120). As one example, the heating part (150) may be provided to apply heat from the outside of the charging housing (120) to the pack insertion space (125). Here, when the heat-exchanged cooling water (W2) is primarily discharged from the pack insertion space (125), the heating part (150) performs a function to vaporize he cooling water (W1) remaining in the pack insertion space (125) by providing heat to the pack insertion space (125).

The heating temperature of the heating part (150) may vary according to the boiling point of the cooling water (W1). As one example, a cooling liquid having a boiling point within a range of 30 to 50 degrees may be used as the cooling water (W1), and the heating part (150) may heat the cooling water (W1) to a temperature above the boiling point.

The circulation part (140) is provided such that upon charging operation of the charging part (130), it provides cooling water (W1) to the pack insertion space (125) and recovers the cooling water (W2) heat-exchanged with the battery pack (110), and upon charging of the battery pack (110), the circulation part (140) cools the battery pack (110) by a direct water-cooling method in which the cooling water directly contacts thereto.

The control part (170) may operate the circulation part (140) such that upon operation of the charging part in a state where the battery pack (110) is inserted into the pack insertion space (125), the cooling water is supplied to the pack insertion space (125) and the cooling water heat-exchanged with the battery pack (110) is recovered. The pack insertion space (125) has a larger volume than the volume of the battery pack (110), and in this structure, the cooling water (W1) may flow into the space between the inner circumferential surface of the pack insertion space (125) and the outer circumferential surface of the battery pack (110).

In addition, when the heat-exchanged cooling water is completely discharged from the pack insertion space (125), the control part (170) may stop the operation of the circulation part (140), and operate the heating part (150) to supply heat to the pack insertion space (125). As described above, in a state where the battery pack is accommodated in the pack insertion space (125), the control part (170) may operate the heating part (150) after stopping the operation of the charging part (130). The heating part (150) supplies heat to vaporize the cooling water remaining in the pack insertion space (125) (or the cooling water remaining on the surface of the battery pack). The heating part (150) may comprise one or more heaters, and each heater may be provided to enable temperature control.

The circulation part (140) comprises a cooler (141), a pump (143), and a cooling water tank (145). Here, the cooling water (W1) is stored in the cooling water tank (145). The cooling water tank (145) is connected to the cooler (141) and the pump (143), respectively.

In addition, the cooler (141) connects the inlet (121) of the charging housing (120) and the cooling water tank (145), and is provided to cool the cooling water.

The pump (143) connects the outlet (122a) of the charging housing (120) and the cooling water tank (145), and is provided to recover the cooling water in the pack insertion space (125) through the outlet (122a). That is, the pump (143) performs a function of suctioning and discharging the cooling water (W1) in the pack insertion space (125) by applying pressure. One or a plurality of pumps (143) may also be provided. In addition, when a plurality of pumps (143) is provided, the pumps may be divided into a primary recovery pump (upon operation of the charging part, recovery of the cooling water) and a secondary recovery pump (upon operation of the heating part, recovery of the vaporized particles of the cooling water), and the like, and used. In this structure, the primary recovery pump and the secondary recovery pump may be installed in parallel to the second pipe and the fifth pipe, respectively.

The cooler (141) may also connect the inlet (121) of the charging housing and the cooling water tank (145), and may be provided to supply the cooling water supplied through the pump (143) to the cooling water tank (145) again.

Specifically, upon charging operation of the charging part (130), the cooler (141) is controlled to connect the cooling water tank (145) and the charging housing (120), and is operated to cool the cooling water (W1) supplied from the cooling water tank (145), and then to provide it to the charging housing (120).

Referring to Figure 6, the control part (170) may control the circulation part such that upon charging operation of the charging part (130), the cooling water (W1) is introduced from the cooling water tank (145) into the pack insertion space (125) after passing through the cooler (141), and the cooling water (W2) heat-exchanged with the battery pack (110) in a process of passing through the pack insertion space (125) flows into the cooling water tank (145) through the pump (143). At this time, upon charging operation of the charging part (130), the control part (170) may open the first valve (121a), the second valve (122a), the third valve (161a), and the fourth valve (164a), and close the fifth valve (165a).

At this time, the cooler (141) cools the cooling water (W1) provided from the cooling water tank (145) and discharges it toward the inlet (121). As the cooler (141), various types of coolers that cool the cooling water (W1) may be used. For example, the cooler (141) may be implemented as a refrigerator for cooling the cooling water using a refrigerant.

Then, upon operation of the heating part (150), the cooler (141) may be controlled to connect the pump (143) and the cooling water tank (145). When the vaporized particles (W3) of the cooling water are provided from the pump (143), the cooler (141) is operated such that it liquefies the particles to provide them to the cooling water tank (145). Accordingly, the vaporized particles (W3) of the cooling water are liquefied while being cooled in the cooler (141), which are recovered to the cooling water tank (145) in the state of cooling water (W1).

That is, the control part (170) may control the circulation part (140) such that upon operation of the heating part (150), the vaporized particles (W3) of the cooling water are provided to the cooler through the pump (143), liquefies in the cooler (141), and then supplied to the cooling water tank (145). At this time, upon operation of the heating part (150), the control part (170) may open the second valve (122a), the third valve (161a), and the fifth valve (165a), and close the first valve (121a) and the fourth valve (164a).

Meanwhile, the pump (143) is connected to the cooling water tank (145) and the cooler (141), respectively, to allow fluid migration, and the pump (143) may be provided to selectively connect the charging housing (120) and the cooling water tank (145), or the charging housing (120) and the cooler (141).

The control part (170) controls the circulation part (140) such that upon charging operation of the charging part (130), the cooling water discharged from the charging housing (120) is transferred to the cooling water tank (145). That is, the control part (170) controls the circulation part such that upon charging operation of the charging part (130), the cooling water supplied from the cooling water tank (145) is cooled through the cooler (141) and then supplied to the inlet (121a).

Upon operation of the heating part (150), the pump (143) is operated to provide the vaporized particles (W3) of the cooling water discharged from the charging housing (120) to the cooler (141) by connecting the charging housing and the cooler (141).

The control part (170) may control the circulation part such that upon operation of the heating part (150), the vaporized particles (W) of the cooling water are supplied to the cooler (141) through the pump (143), liquefied in the cooler (141), and then provided to the cooling water tank (145).

Hereinafter, operations of the circulation part (140) and the heating part (150) upon charging of the battery pack (110) will be described.

First, the battery pack (110) is inserted into the pack insertion space (125) of the charging housing (120), and the charging connector (111) of the battery pack (110) is electrically connected to the charging part (130).

Referring to Figure 6, upon charging operation of the charging part (130), the circulation part (140) is operated. Specifically, the cooling water (W1) flows from the cooling water tank (145) to the cooler (141) along the first pipe (161). The cooler (141) cools the cooling water (W1) to a predetermined temperature. Then, the first valve (121a) is operated to open the inlet (121).

The cooling water (W1) cooled in the cooler (141) flows into the inlet (121) along the second pipe (162). The cooling water (W1) is introduced into the pack insertion space (125) through the inlet (121). The cooling water (W1) may cool the battery pack (110) by a direct water-cooling method while exchanging heat with the installed battery pack (110) in the pack insertion space (125). That is, the cooling water (W1) cools the heat (Q) generated from the battery pack (110).

Upon operation of the pump (143), the heat-exchanged cooling water (W2) in the pack insertion space (125) is discharged to the third pipe (163) through the outlet (122). At this time, the outlet (122) is in a state opened by the second valve (122a).

The heat-exchanged cooling water (W2) flows into the pump (143) along the third pipe (163) and is discharged to the fourth pipe (164) via the pump (143). The heat-exchanged cooling water (W2) flows into the cooling water tank (145) along the fourth pipe (164).

During the charging process of the battery pack (110), the circulation part (140) is operated such that while the cooling water (W1) passes through the cooling water tank (145), the cooler (141), the pack insertion space (125), and the pump (143) sequentially, it is circulated to the cooling water tank (145) again. Accordingly, the present invention can improve the charging efficiency of the battery pack (110) by cooling the battery pack (110) using a direct water-cooling method.

Thereafter, when the battery pack (110) is completely charged, a process of recovering the cooling water (W1) from the pack insertion space (125) proceeds (see Figure 7). Upon recovery of the cooling water (W1), the first valve (121a) is operated to close the inlet (121).

Then, the second valve (122a) is operated to open the outlet (122). Upon operation of the pump (143), the heat-exchanged cooling water (W2) in the pack insertion space (125) is discharged to the third pipe (163) through the outlet (122). Then, it flows into the cooling water tank (145) via the pump (143).

When the discharge of the cooling water (W1) is primarily completed from the pack insertion space (125), the heating part (150) is operated.

Referring to Figure 8, upon operation of the heating part (150), heat (Q) is applied to the pack insertion space (125), and the cooling water remaining in the pack insertion space (125) is vaporized. The vaporized particles (W3) of the cooling water are discharged to the third pipe (163) through the outlet (122) upon operation of the pump (143).

The vaporized particles (W3) of the cooling water flow into the cooler (141) via the pump (143). Specifically, the vaporized particles (W3) of the cooling water pass through the pack insertion space (125), the third pipe (163), the pump (143), and the fifth pipe (165) sequentially, and are provided to the cooler (141).

The vaporized particles (W3) of the cooling water are cooled in the cooler (141) and liquefied. The cooling water (W1) liquefied in the cooler (141) flows into the cooling water tank (145).

After the battery pack (110) is completely charged, the cooling water is primarily recovered from the charging housing (120), and the cooling water remaining in the outer surface of the battery pack (100) is vaporized and recovered, whereby the present invention can recover the cooling water introduced into the charging housing as much as possible. As a result, by preventing the loss of cooling water, it is possible to reduce maintenance costs of the battery pack cooling device.

In addition, it is possible to completely remove the cooling water on the battery pack surface.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

After the battery pack is completely charged, the cooling water is primarily recovered from the charging housing, and the cooling water remaining in the outer surface of the battery pack is vaporized and secondarily recovered, whereby the present invention can recover the cooling water introduced into the charging housing as much as possible.

## Claims

1. A battery pack cooling device comprising:
a charging housing provided with an inlet, an outlet, and a pack insertion space into which a battery pack is inserted;
a charging part, which is electrically connected to the battery pack inserted into the pack insertion space, for charging the battery pack;
a circulation part provided such that cooling water is supplied to the pack insertion space through the inlet and the cooling water in the pack insertion space is recovered through the outlet;
a heating part provided to provide heat to the pack insertion space; and
a control part for controlling the charging part, the heating part, and the circulation part.

2. The battery pack cooling device according to claim 1, wherein
the control part operates the circulation part such that upon operation of the charging part in a state where the battery pack is inserted into the pack insertion space, the cooling water is supplied to the pack insertion space and the cooling water heat-exchanged with the battery pack is recovered.

3. The battery pack cooling device according to claim 2, wherein
when the heat-exchanged cooling water is completely discharged from the pack insertion space, the control part stops the operation of the circulation part and operates the heating part to supply heat to the pack insertion space.

4. The battery pack cooling device according to claim 3, wherein
in a state where the battery pack is accommodated in the pack insertion space, the control part stops the operation of the charging part and then operates the heating part.

5. The battery pack cooling device according to claim 3, wherein
the heating part supplies heat to vaporize the cooling water remaining in the pack insertion space.

6. The battery pack cooling device according to claim 3, wherein the circulation part comprises:
a cooling water tank in which the cooling water is stored;
a cooler provided such that the inlet of the charging housing and the cooling water tank are connected, and the cooling water is cooled; and
a pump for connecting the outlet of the charging housing and the cooling water tank, and recovering the cooling water in the pack insertion space through the outlet.

7. The battery pack cooling device according to claim 6, wherein
the control part controls the circulation part such that upon charging operation of the charging part,
the cooling water is introduced from the cooling water tank into the pack insertion space after passing through the cooler, and
the cooling water heat-exchanged with the battery pack in a process of passing through the pack insertion space flows into the cooling water tank through the pump.

8. The battery pack cooling device according to claim 6, wherein
the control part controls the circulation part such that upon operation of the heating part, the vaporized particles of the cooling water are provided to the cooler through the pump, liquefied in the cooler, and then supplied to the cooling water tank.

9. The battery pack cooling device according to claim 6, wherein
the pump is connected to the cooling water tank and the cooler, respectively, to allow fluid migration,
the control part controls the circulation part such that upon charging operation of the charging part, the cooling water supplied from the cooling water tank is cooled through the cooler and then supplied to the inlet, and
the control part controls the circulation part such that upon operation of the heating part, the vaporized particles of the cooling water are supplied to the cooler through the pump, liquefied in the cooler, and then supplied to the cooling water tank.

10. The battery pack cooling device according to claim 6,
further comprising a pipe part connecting the circulation part and the charging housing, wherein the pipe part comprises:
a first pipe connecting the cooler and the cooling water tank;
a second pipe connecting the cooler and the inlet of the charging housing;
a third pipe connecting the outlet of the charging housing and the pump;
a fourth pipe connecting the pump and the cooling water tank; and
a fifth pipe connecting the pump and the cooler.

11. The battery pack cooling device according to claim 10, further comprising:
a first valve provided at the inlet of the charging housing and controlling the opening and closing of the inlet;
a second valve provided at the outlet of the charging housing and controlling the opening and closing of the outlet;
a third valve provided on the first pipe;
a fourth valve provided on the fourth pipe; and
a fifth valve provided on the fifth pipe.

12. The battery pack cooling device according to claim 11, wherein
the control part controls the circulation part such that upon charging operation of the charging part, the first valve, the second valve, the third valve, and the fourth valve are opened, and the fifth valve is closed;
the cooling water is introduced from the cooling water tank into the pack insertion space after passing through the cooler; and
the cooling water heat-exchanged with the battery pack in a process of passing through the pack insertion space flows into the cooling water tank through the pump.

13. The battery pack cooling device according to claim 11, wherein
the control part controls the circulation part such that upon operation of the heating part, the second valve, the third valve, and the fifth valve are opened, and the first valve and the fourth valve are closed; and
the vaporized particles of the cooling water are provided to the cooler through the pump, liquefied in the cooler, and then supplied to the cooling water tank.

14. A charging station comprising the battery pack cooling device according to any one of claims 1 to 13.
